# EUROPEAN PATENT SPECIFICATION

(11) **EP 1 767 795 B1**
(45) Date of publication and mention of the grant of the patent: **10.03.2010**
(21) Application number: 06017975.1
(22) Date of filing: 31.07.2002
(51) Int. Cl.: F16B 37/06

(54) **Self-attaching fastener**
Selbstbefestigendes Befestigungselement
Élément de fixation automatique

(30) Priority: 15.08.2001 US 312514 P
(43) Date of publication of application: 28.03.2007
(62) Divisional of application: 02765905.1
(73) Proprietor: Whitesell International Corporation, Taylor, MI 48180 (US)
(72) Inventor: Parker, John M., Ann Arbor, MI 48104 (US); Vrana, John J., Rochester Hills, MI 48307 (US)
(74) Representative: Heselberger, Johannes

(56) References cited:
- EP-A- 0 669 473
- US-A- 3 648 747
- US-A- 3 711 931
- US-A- 4 389 766
- US-A- 4 432 681
- US-A- 4 690 599

## Description

### FIELD OF THE INVENTION

This invention relates to a self-attaching fastener which may be utilized in mass production applications as a self-clinching or self-piercing and clinching fastener. More particularly, this invention relates to a self-attaching nut fastener which may be permanently installed in a metal panel in a die press with conventional installation apparatus.

### BACKGROUND OF THE INVENTION

Self-attaching fastener systems including pierce and clinch nuts developed by the applicant have been used for many years in mass production applications, including the automotive industry. Pierce nuts of this type are conventionally formed by rolling the general configuration of the nut from steel bar stock, cutting the nuts to length and performing various finishing operations including piercing and threading the nut bore. Pierce nuts manufactured by this method are therefore rectangular and include a rectangular pilot portion having a threaded bore, rectangular flange portions on opposed sides of the pilot portion and panel receiving grooves located either in the opposed sides of the pilot portion or in the flange portions on opposed sides of the pilot portion. Such a self-piercing nut is described, for example, in US 4.690.599. Self-attaching fasteners of this type may then be used as pierce and clinch nuts, wherein the end face of the pilot portion serves as a punch to pierce an opening in the panel or as a clinch nut, wherein the pilot portion is received through an opening in the panel and clinched to the panel.

In mass production applications, the self-attaching fasteners are conventionally installed in a metal panel in a die press, wherein one of the die platens includes an installation head which receives the self-attaching fasteners for installation having a reciprocating plunger and a die member or die button in the opposed die platen which clinches the panel adjacent the panel opening into the nut grooves. Self-attaching fasteners of the type described above continue to enjoy commercial success particularly in mass production applications. Such self-attaching fasteners are supplied either in bulk form, wherein the fasteners are supplied from a hopper to the installation head through chuting or the fasteners are supplied in a coil of preoriented fasteners interconnected by frangible wires as disclosed in U.S. Patent No. 3,711,931 assigned to the predecessor in interest of the assignee of this application and the method of installation is disclosed in U.S. Patent No. 3,648,747 also assigned to the predecessor in interest of the assignee of this application.

As will be understood by those skilled in this art, the configuration of the self-attaching fasteners is limited by the roll form method. Of course, there are numerous other fasteners and fastener systems which are formed by cold header techniques including self-attaching fasteners. However, the prior art does not disclose or suggest a self-attaching fastener which combines the advantages of the pierce and clinch nuts described above in a nut configuration which may be formed by cold heading techniques. Further, a rectangular self-piercing pilot pierces a square or rectangular opening in the panel which may create stress concentrations in the panel, particularly at the corners of the pierced rectangular opening. Finally, the prior art does not disclose a self-attaching fastener which may be formed by conventional cold heading techniques and which may be formed into a preoriented fastener strip for mass production applications. The self-attaching fastener of this invention combines the advantages of the roll formed pierce and clinch nuts described above in a fastener which may be formed by conventional cold heading techniques and which may be supplied in a preoriented coil of fasteners for mass production applications.

### SUMMARY OF THE INVENTION

As set forth above, the self-attaching fastener of this invention combines the advantages of the roll formed pierce and clinch nuts described above with the advantages of a fastener formed by conventional cold heading techniques and which may be supplied to a conventional installation head in either bulk or preoriented strip form. The self-attaching fastener of this invention also eliminates certain problems associated with conventional roll formed pierce and clinch nuts, including elimination of stress risers formed in the panel at the corners of the rectangular opening formed in the panel and cracking. The self-attaching fastener of this invention also increases the fatigue life of the fastener and panel assembly.

The self-attaching fastener of this invention includes a central generally cylindrical pilot portion having a planar annular end face, which serves as a piercing face when the fastener is used as a self-piercing fastener, a bore extending through the pilot portion through the end face and arcuate or generally semicircular flange portions on opposed sides of the pilot portion spaced from the pilot portion. Each of the flange portions include a planar generally arcuate panel supporting surface spaced below the plane of the end face of the pilot portion and a second planar bearing surface spaced below the plane of the panel supporting surface of the flange portions. Each flange portion comprises a surface adjacent to the second bearing surface which is arcuate at a center and linear at end portions. In a preferred embodiment, the second bearing surface is located between the flange portions and the pilot portion and generally surrounding the pilot portion. In one preferred embodiment, the surfaces of the flange portions opposite the pilot portion are inclined inwardly from the second bearing surface toward the pilot portion, such that the combination of the flange portions and the pilot portion form reentrant grooves which increase the push-off strength of the fastener when installed in a panel. The preferred embodiments of the fastener also include an antirotation feature which limits or prevents rotation of the fastener relative to the panel following installation. In one preferred embodiment, the fastener includes integral tab portions which may be integrally struck from the end face of the pilot portion which extend radially from the pilot portion toward the end faces of the fastener and flats on the pilot portion where the tabs are struck and which, in combination, provide improved torque resistance when threading a male fastener into the nut bore. In another preferred embodiment, notches are formed in the wall of the flange portions facing the pilot portion forming tabs overlying the panel supporting surfaces. These notches in combination with the tabs also provide improved torque resistance. The generally arcuate flange portions of the fastener with an arcuate central portion and linear end portions provide an excellent torque resistance.

The body portion of the self-attaching fastener of this invention preferably includes generally arcuate side faces and planar end faces, wherein the generally arcuate flange portions that project from the second bearing surface from the generally arcuate side surfaces to conform to the shape of the flange portions. In one of the preferred embodiments of the self-attaching fastener of this invention, the generally arcuate flange portions on opposed sides of the pilot portion comprise at least two spaced arcuate segments and the second planar bearing surface extends between the spaced arcuate segments, providing additional torque resistance. In another preferred embodiment, the generally arcuate flange portions are continuous, each having an arcuate midportion and linear end portions integral with and extending from the midportion, and the flange portions opposite the pilot portion are inclined to provide additional bearing areas on the flange portions and push-off strength. Additional push-off strength may also be provided by inclining the opposed surfaces of the arcuate sections of the flange portions inwardly from the second bearing surface to the panel supporting surfaces. Further push-off strength may be provided by inclining the outer surface of the projecting pilot portion from the second bearing surface toward the flange portions. In the preferred embodiment of the fastener, wherein the pilot portion is inclined inwardly from the end face; which serves as a piercing face, the outer surface adjacent the end face is cylindrical to provide increased columnar support for piercing and then inclined inwardly, forming a frustoconical surface providing additional push-off strength for the fastener and panel assembly.

The self-attaching fastener of this invention may thus be formed by conventional cold heading techniques and provides superior performance over prior fasteners formed by cold heading. The fastener of this invention also provides the advantages of a cold rolled fastener without the expense of a rolling mill. Finally, the self-attaching fastener of this invention may be integrated in a preoriented fastener strip for mass production applications. For such applications, wire receiving grooves are provided in the second bearing surface preferably on opposed sides of the pilot portion between the pilot portion and the flange portions and extending between the end faces of the fastener body. In the preferred embodiment of a fastener strip, the wire grooves include a plurality of space pockets in the lower surface or bottom wall of the groove preventing movement of the fasteners on the wires. The fasteners may then be formed into a continuous preoriented fastener strip, wherein the fasteners are first oriented in end to end relation and a frangible wire is then rolled into the wire receiving grooves.

Other advantages of the self-attaching fastener of this invention will be more fully understood from the following description of the preferred embodiments, the appended claims and the drawings, a brief description of which follows.

### BRIEF DESCRIPTION OF THE DRAWINGS

Figure 1 is a top perspective view of one embodiment of the self-attaching fastener;

Figure 2 is a top view of the self-attaching fastener shown in Figure 1;

Figure 3 is an end view of the embodiment of the self-attaching fastener shown in Figures 1 and 2;

Figure 4 is a top view of the self-attaching fastener shown in Figures 1 to 3 attached to a metal panel;

Figure 5 is a side cross-sectional view in Figure 4 in the direction of view arrows 5-5;

Figure 6 is a cross-sectional view of Figure 4 in the direction of view arrows 6-6;

Figure 7 is a top perspective view of an alternative embodiment of the self-attaching fastener;

Figure 8 is a top perspective view of another embodiment of the self-attaching fastener;

Figure 9 is a top view of the self-attaching fastener shown in Figure 8;

Figure 10 is an end view of the self-attaching fastener shown in Figures 8 and 9;

Figure 11 is a top view of the self-attaching fastener shown in Figures 8 to 10 attached to a panel;

Figure 12 is a side cross-sectional view of the fastener and panel assembly shown in Figure 11 in the direction of view arrows 12-12;

Figure 13 is a cross-sectional view of the fastener and panel assembly shown in Figure 11 in the direction of view arrows 13-13;

Figure 14 is a top perspective view of an embodiment of the self-attaching fastener of this invention;

Figure 15 is a top view of the self-attaching fastener shown in Figure 14;

Figure 16 is a cross-sectional end view of the self-attaching fastener shown in Figures 14 and 15;

Figure 17 is a top plan view of an alternative embodiment of the self-attaching fastener;

Figure 18 is a side cross-sectional view of the self-attaching fastener shown in Figure 17 in the direction of view arrows 18-18;

Figure 19 is a top perspective view of an alternative embodiment of the self-attaching fastener;

Figure 20 is a perspective top view of an alternative embodiment of the self-attaching fastener ;

Figure 21 is a partial top view of the embodiment of the self-attaching fastener shown in Figure 20; and

Figure 22 is a top perspective view of a preoriented strip of fasteners as shown in Figures 7 to 9.

### DETAILED DESCRIPTION OF THE PREFERRED EMEBODIMENTS

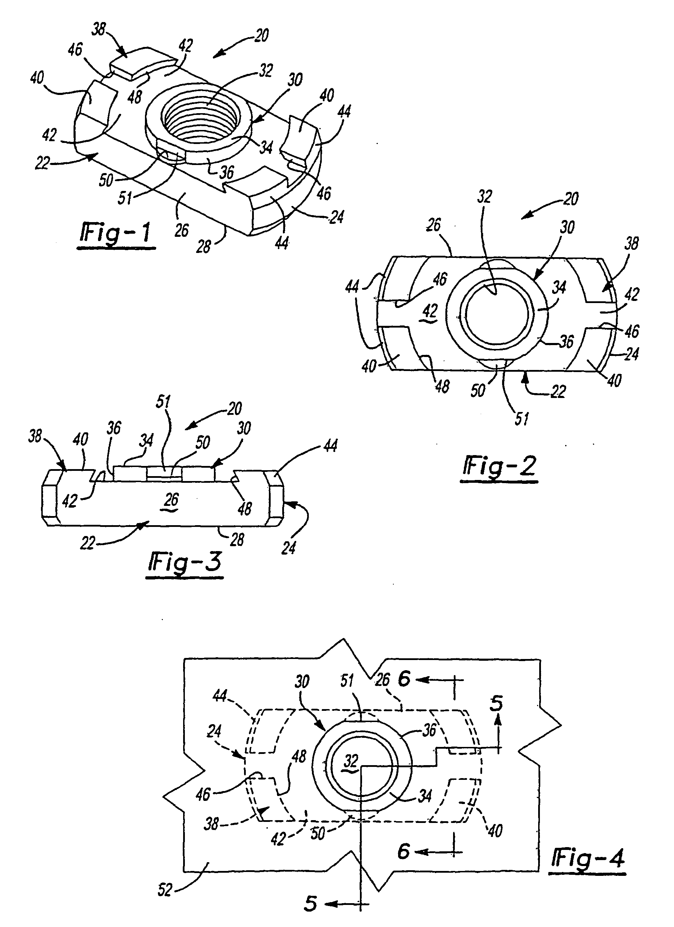

The embodiment of the self-attaching fastener 20 shown in Figures 1 to 3 includes a body portion 22 having arcuate side faces 24, planar end faces 26 and a bottom bearing surface 28. A tubular or annular generally cylindrical central pilot portion 30 projects from the body portion having a bore 32 extending through the pilot portion 30 and the body portion of the fastener which may be threaded, as shown. Alternatively, the bore 32 may be unthreaded for receipt of a thread forming or thread rolling male fastener. The pilot portion 30 includes a planar end face 34 which serves as a piercing face when the fastener 20 is used as a self-piercing fastener. In this embodiment, the outer wall 36 of the pilot portion is cylindrical. The fastener 20 further includes arcuate flange portions 38 on opposed sides of the pilot portion 30 which extend from the arcuate side faces 24 each having arcuate planar panel supporting or first bearing surfaces 40 which are spaced below the plane of the piercing end face 34 as best shown in Figure 3. The self-attaching fastener 20 further includes a second or main planar bearing surface 42 which is spaced below the plane of the first bearing surfaces 40 of the flange portions located between the flange portions 38 and the central pilot portion 30 and surrounds the pilot portion 30 as shown. In this embodiment of the self-attaching fastener, the flange portions 38 are comprised of spaced arcuate segments 44 having opposed inclined surfaces 46 which are inclined inwardly from the second or main bearing surface 42 to the first or panel supporting bearing surfaces 44 providing increased push-off strength when the fastener is attached to the panel. Further, in the preferred embodiments, the surface or surfaces 48 of the flange portions opposite the pilot portion 30 are inclined from the main bearing surface 42 toward the pilot portion 30 as best shown in Figure 3. Finally, the self-attaching fastener 20 shown in Figures 1 to 3 includes integral tabs 50, which may be integrally struck from the piercing end face 34 of the pilot, as shown, forming flats 51 on opposed sides of the pilot portion. As will be understood by those skilled in this art, the fastener 20 illustrated in Figures 1 to 3 may be formed by conventional cold heading techniques.

As described further in the above-referenced U.S. Patent No. 3,648,747, self-piercing and clinching fasteners of the type shown are generally installed in a die press, wherein the upper platen of the die press includes an installation head (not shown) which receives the fasteners having a reciprocating plunger which engages the bottom bearing surface 28 and a die member or die button (not shown) in the lower die platen which receives the panel to be installed. The piercing face 34 then engages and pierces the panel and the panel portion adjacent the pierced opening is then inelastically permanently deformed into recesses in the fastener by projecting lips of the die button as will be understood by those skilled in this art. As will be understood, the piercing face 34 of the pilot portion 30 first engages the panel, then pierces an opening in the panel for receipt of the pilot portion. Alternatively, where the self-attaching fastener is utilized as a self-clinching fastener only, the panel is prepierced for receipt of the pilot. The panel is then received on the first bearing surface 40 of the flange portions 38. Finally, the lip portions of the die button (not shown) inelastically deform the panel portion adjacent the opening into the recesses provided in the fastener, completing the installation. The configuration of the clinching lips of the die button will depend upon the configuration of the fastener.

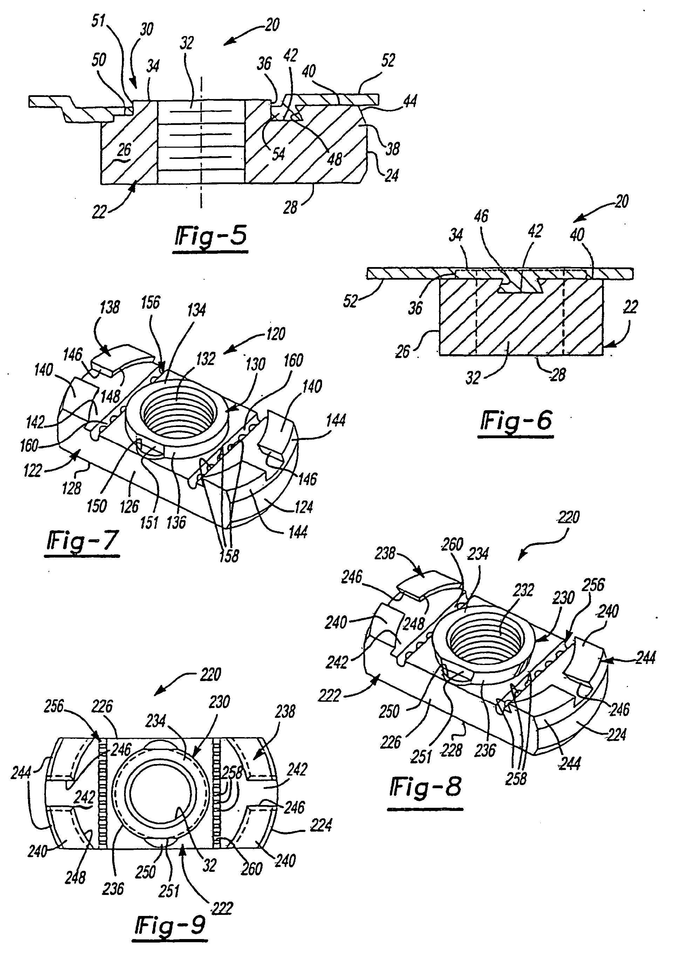

Figures 4 to 6 illustrate a panel and fastener assembly formed by the method and apparatus described above with the fastener 20 illustrated in Figures 1 to 3. Figure 4 is a top view of the panel 52 following installation, wherein the pilot portion 30 extends through the panel 52 and the panel is supported on the panel supporting surfaces 40 of the flange portions 38 and deformed onto the main or second bearing surfaces 42. As best shown in Figure 5, the panel portion 54 is deformed against the main or second bearing surface 42 beneath the inclined surfaces 48 of the flange portions and the outer wall 36 of the pilot portion providing push-off strength and the panel is thinned and deformed around the tab portions 50 and against the flats 51 preventing rotation of the fastener 20 relative to the panel. As best shown in Figure 6, the panel 52 is also deformed against the primary bearing surface 42 beneath the opposed inclined surfaces 46 of the flange portions 38 providing additional push-off strength and preventing rotation of the fastener 20 on the panel. Because the pilot portion 30 is round, rather than rectangular, stress risers are avoided in the panel at the pilot and the arcuate or generally arcuate flange portions also provide improved retention of the fastener to the panel and avoids stress risers or cracking of the panel as described.

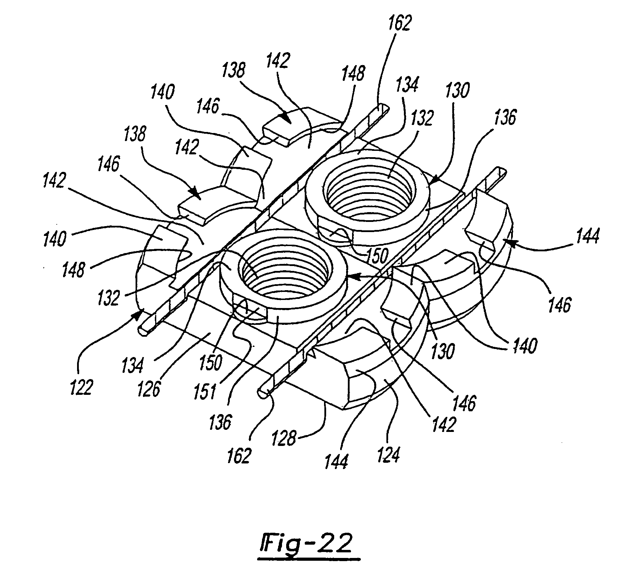

The embodiment of the self-attaching fastener 120 illustrated in Figure 7 is identical to the fastener 20 illustrated in Figures 1 to 3 except the fastener 120 includes parallel wire receiving grooves 156 in the primary or second bearing surface 142 on opposed sides of the pilot portion 130. As shown, the wire grooves 156 extend from one end face 126 to the other. In the preferred embodiment, the wire receiving grooves include a plurality of spaced pockets 158 separated by ribs 160. As described in detail in the copending application filed concurrently herewith, the fasteners 120 may then be interconnected in a continuous preoriented strip of fasteners by aligning the fasteners 120 in end to end relation, such that the wire grooves 156 are coaxially aligned as shown in Figure 22 and frangible continuous wires 162 are rolled into the wire grooves 156. In the preferred embodiment, the wires are deformed by the rollers (not shown) against the bottom wall of the groove and deformed into the pockets 158. The retaining wires 162 are preferably formed of a flexible material permitting the preoriented strip of fasteners to be rolled into a coil, but may be cut during installation of the fastener by the plunger of the installation head (not shown). Thus, the wires are preferably flexible, but frangible. A suitable material for the wires is annealed 1065 carbon steel, which is not heat treated. This material provides sufficient ductility and flexibility for use in this application. Other suitable materials include monofilament, nylon cord or cable and other suitable metals and polymers. Because the fastener 120 shown in Figure 7 is identical to the fastener 20 shown in Figure 1, the elements of the fastener are numbered in the same sequence as Figure 1 and no further explanation is required.

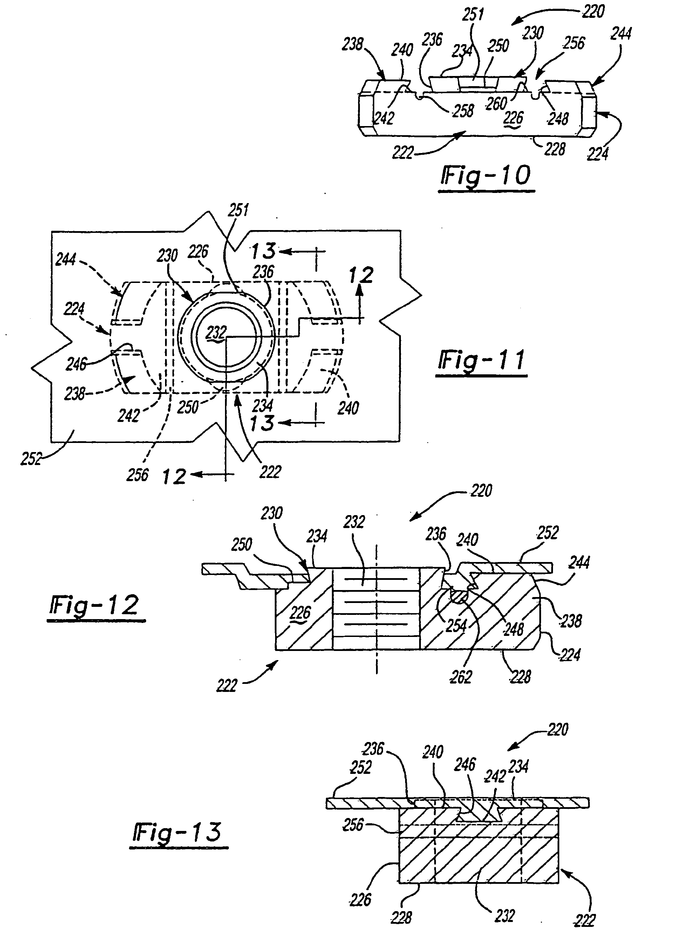

Figures 8 to 10 illustrate a further alternative embodiment of the self-attaching fastener 220. The self-attaching fastener illustrated in Figures 8 to 10 may be identical to the fastener 120 illustrated in Figure 7, except as stated below. The outer wall 236 of the pilot portion 230 adjacent the second bearing surface 242 is inclined outwardly from the second or primary bearing surface 242 of the fastener toward the flange portions 238 as best shown in Figure 10. Thus, the end face or piercing face 234 overlies the primary bearing surface 242 forming a dovetail-shaped opening between the inclined surfaces 248 of the flange portions and the opposed inclined surface 236 of the pilot portion as best shown in Figure 10. However, as shown, the outer surface 237 adjacent the end face 234 is preferably cylindrical to provide columnar support for piercing and the pilot portion 230 is substantially cylindrical. Because the embodiment of the self-attaching fastener 220 shown in Figures 8 to 10 is identical to the fastener 120 illustrated in Figure 7 including the wire receiving grooves 256 except for the inclined surface 236 of the pilot portion, the elements of the self-attaching fastener 220 are numbered in the same sequence as the fastener 120 shown in Figure 7 and no further description is required.

Figures 11 to 13 illustrate the fastener 220 attached to a panel 252 similar to Figures 4 to 6 with frangible wires 262 in the wire grooves 256 as described above in regard to Figures 7 and 22. As best shown in Figure 12, the panel portion 254 is thus deformed beneath both inclined walls 236 of the pilot portion and 248 of the flange portions, forming a dovetail-shaped recess and improved push-out strength for the fastener and panel assembly. All other elements are identical to the previous embodiments described above and are numbered in the same sequence such that no further description is required.

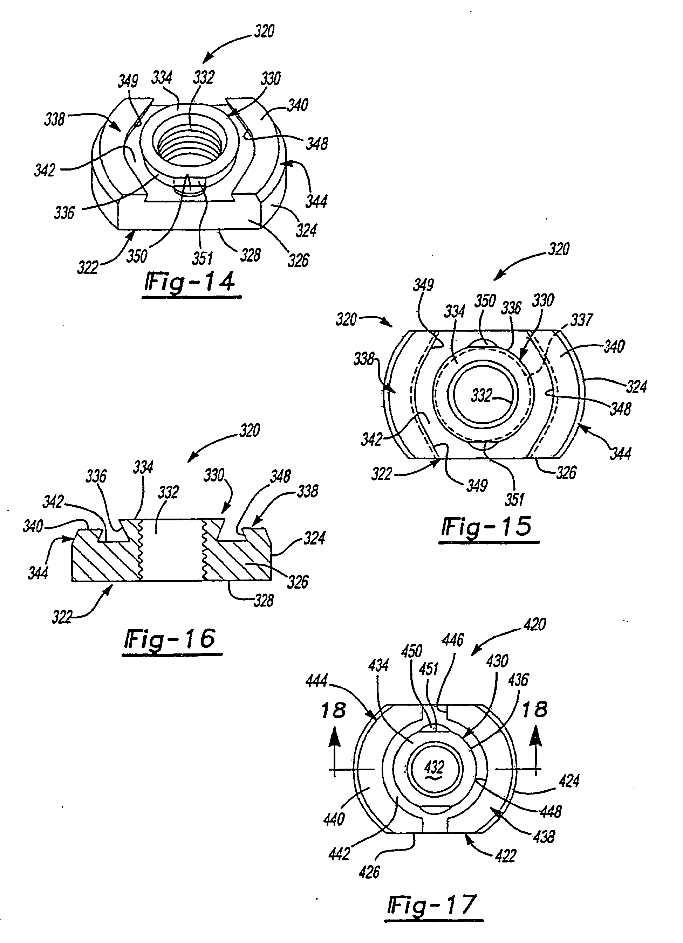

Figures 14 to 16 illustrate an embodiment of the self-attaching fastener 320 of this invention which is particularly suitable for heavy or thicker panel metal applications. As will be understood by those skilled in this art, it is more difficult to deform thicker panel metal into confined recesses, such as the dovetail-shaped recesses between the spaced arcuate segments 44 of the flange portions 38 as shown in the previous figures. Thus, in the embodiment of the self-attaching fastener 320 shown in Figures 14 to 16, the generally arcuate flange portions 338 are continuous on both sides of the central projecting pilot portion 330. Further, the inclined surface 348 of the flange portions 338 is arcuate at the center as shown in Figures 14 and 15, but the end portions 349 adjacent the end faces 326 are linear to provide additional torque resistance and bearing area for heavy metal applications. In the preferred embodiment, the end portions 339 of the generally arcuate flange portions 338 are linear as shown and the side faces 324 conform to the shape of the flange portions 338. Finally, the inclined surface 336 adjacent the primary bearing surface 342 is inclined, but the surface 337 adjacent the piercing face 334 is cylindrical, providing additional columnar strength for the pilot portion during piercing as best shown in Figure 16. Because of the improved torque resistance provided by the linear end portions 339 and 349 of the flange portions 338, the integral tabs have been eliminated. Other details of the embodiment of the self-attaching fastener 320 may be identical to the self-attaching fasteners described above and the elements are numbered in the same sequence such that no further description is required for a person of ordinary skill in this art.

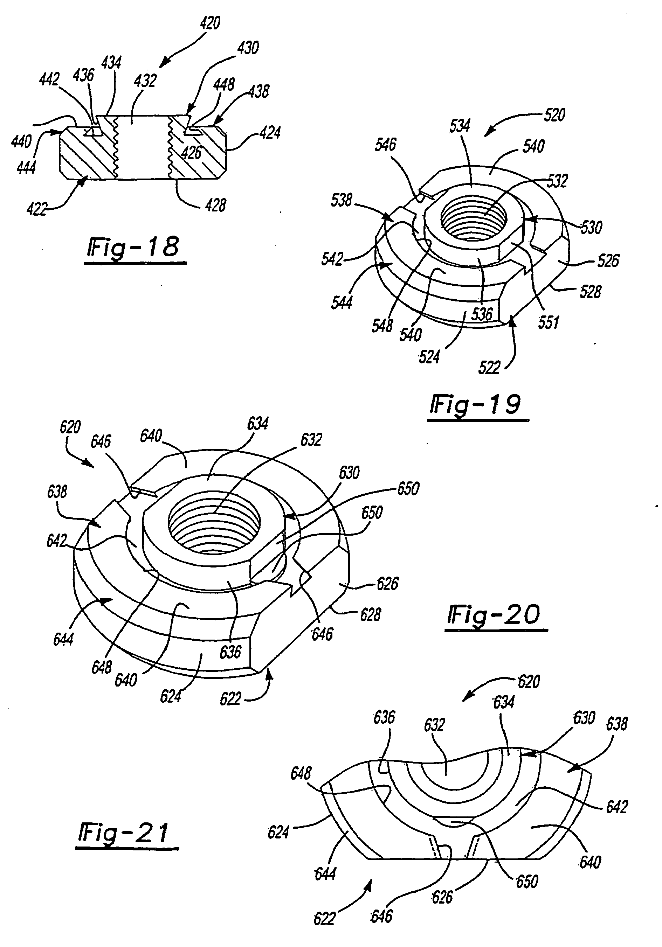

Figures 17 and 18 illustrate a preferred embodiment of the self-attaching fastener 420 which is particularly suitable for installation and relatively thin panels. In this embodiment, the body is generally rectangular similar to Figure 7 and the pilot 430 is cylindrical having a cylindrical external surface 436. The inside wall 448 of the flange portions 438 are inclined inwardly from the first bearing surface 440 to the second bearing surface 442. More importantly, the antirotation feature of this embodiment comprises notches 449 which extend radially opposite the pilot 430 into the bearing surface 440 of the flange portions. In the preferred embodiment, the flange portions 438 include at least one notch in each of the flange portions, more preferably two notches 449 in each of the flange portions equally spaced from the planar ends 426 as shown. In the most preferred embodiment of the self-attaching fastener 420, the notches 449 are integrally struck from the flange portions forming radial tabs 443 overlying the second bearing surface 442. The radial notches in 449 and tabs 443 provide excellent torque resistance. Further pull-off strength may also be provided by undercutting the pilot (not shown). Again, the elements of the self-attaching fastener 420 shown in Figures 17 and 18 are numbered in the same sequence as the previous figures such that no further description is necessary for a complete understanding of this embodiment.

In the embodiment of the self-attaching fastener 520 shown in Figure 19, the arcuate flange portions 538 extend substantially around the pilot portion 530 and the opposed ends 546 are inclined inwardly from the first bearing surface 540 as shown. Further, the fastener is generally circular having planar end surfaces 526 and the tabs are replaced by planar surfaces 551 on opposed sides of the pilot portion 530. The planar surfaces 551 provide torsional resistance and additional panel bearing surface 542 between the pilot portion 530 and the flange portion 538, eliminating the requirement for tabs. Again, the elements of the self-attaching fastener 520 illustrated in Figure 19 is numbered in the same sequence as the previous embodiments, such that a person of ordinary skill in this art will not require any further description.

Finally, the self-attaching fastener 620 illustrated in Figures 20 and 21 is similar to the self-attaching fastener 520 illustrated in Figure 19, except that the inclined surfaces 646 between the flange portions 638 are also inclined from the end faces 626 toward the pilot portion 630 thereby providing additional retention of the fastener on a panel (not shown) and the integral tab portions 650 drive panel metal into the V-shaped grooves defined between the flange portions, providing a very secure installation. Again, the elements of the self-attaching fastener 620 illustrated in Figures 20 and 21 have been numbered in the same sequence as the prior embodiments, such that further explanation is not required for a person of ordinary skill in this art.

In the most preferred embodiments of the self-attaching fasteners of this invention, wherein push-off strength is desired, the surfaces of the flange portions facing the pilot portion are inclined from the primary bearing surface toward the pilot portion as shown, for example, in the drawings illustrating the embodiments of the self-attaching fasteners 20, 120, 320, etc. Further, the preferred embodiments include antirotation or torque resistance means to prevent rotation of the fastener relative to the panel following installation particularly during threading of a bolt or male fastener into the nut bore. In one embodiment, a tab portion integrally struck from the pilot portion and extends radially toward the end faces of the self-attaching fastener. In another embodiment, particularly for thin metal applications, the self-attaching fastener includes flange portions comprising spaced arcuate segments, wherein the opposed surfaces of the segments are inclined toward each other from the main bearing surface toward the panel supporting surfaces of the flange portions providing increased push-off strength and torque resistance. In another preferred embodiment for thin metal applications, the flange portions include radial notches preferably integrally struck from the first bearing surface of the flange portions forming radial tabs extending toward the pilot portion overlying the second bearing surface. Finally, for thick metal applications, torque resistance is provided by flange portions having an arcuate midportion and linear end portions.

Where the self-attaching fastener of this invention is utilized as a self-piercing fastener, the end face of the pilot portion is preferably planer and the bearing surfaces of the flange portions are spaced below of the plane of the piercing face. Further, in self-piercing applications, the fastener is formed from steel having a hardness greater than the metal panel to which it is attached.

## Claims

1. A self-attaching fastener (320), comprising:
a generally cylindrical pilot portion (330) having a planar annular end face (334), a bore (332) extending through said pilot portion (330) and through said planar annular end face (334), a body portion (322) having planar end faces (326), spaced generally arcuate flange portions (338) on opposed sides of said pilot portion (330) spaced from said pilot portion (330) each having a generally planar generally arcuate first bearing surface (340) spaced below the plane of said planar annular end face (334) of said pilot portion (330) and a second generally planar bearing surface (342) spaced below the plane of said first bearing surface (340), wherein each of said generally arcuate flange portions (338) comprises a surface (348) adjacent to said second bearing surface (342) which is arcuate at a center and linear at end portions (349).

2. The self-attaching fastener (320) as defined in Claim 1, wherein said second generally planar bearing surface (342) is located between said flange portions (338) and said pilot portion (330) and generally surrounding said pilot portion (330).

3. The self-attaching fastener (320) as defined in any of Claims 1 or 2, wherein said generally planar arcuate first bearing surfaces (340) each comprise at least two spaced generally arcuate segments and said second generally planar bearing surface (342) extends between said spaced generally arcuate segments.

4. The self-attaching fastener (320) as defined in Claim 3, wherein said spaced generally arcuate segments include opposed inclined surfaces (348) angling inwardly from said second bearing surface (342) to said first bearing surface (340).

5. The self-attaching fastener (320) as defined in any of Claims 1 to 4, wherein said generally arcuate flange portions (338) each include an inclined surface (348) facing said pilot portion (330) angling inwardly from said second bearing surface (342) toward said pilot portion (330).

6. The self-attaching fastener (320) as defined in Claim 5, wherein said inclined surface (348) of said flange portions (338) facing said pilot portion (330) includes an annular conical midportion and linear inclined side portions on opposed sides of said midportion.

7. The self-attaching fastener (320) as defined in any of Claims 1 to 6, wherein said generally cylindrical pilot portion (330) includes an angled outer surface inclined from said second bearing surface (342) toward said flange portions (338).

8. The self-attaching fastener (320) as defined in any of Claims 1 to 7, wherein said generally cylindrical pilot portion (330) includes integral tab portions (350) spaced below said plane of said end face overlying said second generally planar bearing surface (342).

9. The self-attaching fastener (320) as defined in Claim 8, wherein said tab portions (350) are integrally struck from said planar end face of said pilot portion (330) and extend radially toward an end face of said self-attaching fastener (320) and the pilot portion (330) includes flat surfaces (351) above said tab portions (350).

10. The self-attaching fastener (320) as defined in any of Claims 1 to 9, wherein said self-attaching fastener (320) includes planar end faces and arcuate side faces and said generally arcuate flange portions (338) extend from said arcuate side faces.

11. The self-attaching fastener (320) as defined in any of Claims 1 to 10, wherein said second bearing surface (342) includes linear wire receiving grooves on opposed sides of said pilot portion (330).

12. The self-attaching fastener (320) as defined in Claim 11, wherein said wire receiving grooves each include a bottom surface having a plurality of spaced pockets.

13. The self-attaching fastener (320) as defined in any of Claims 1 to 11, wherein said generally cylindrical pilot portion (330) includes a cylindrical surface adjacent said end face and an inwardly inclined frustoconical surface adjacent said second bearing surface (342).

14. The self-attaching fastener (320) as defined in Claim 13, wherein said generally arcuate flange portions (338) each include an inclined generally arcuate face opposite said inwardly inclined frustoconical surface of said pilot portion (330) inclined inwardly from said first bearing surface (340) to said second bearing surface (342).

15. The self-attaching fastener (320) as defined in any of Claims 1 to 14, wherein said generally arcuate flange portions (338) each include a surface opposite said generally cylindrical pilot portion (330) having a notch extending into said first bearing surface (340).

16. The self-attaching fastener (320) as defined in Claim 15, wherein said generally arcuate flange portions (338) each include a plurality of said notches generally equally spaced in said generally arcuate flange portions (338).

17. The self-attaching fastener (320) as defined in Claim 15, wherein said notch is integrally struck from said first bearing surface (340) forming an integral tab overlying said second bearing surface (342) extending toward said pilot portion (330).

18. The self-attaching fastener (320) as defined in any of Claims 1 to 17, wherein said generally linear end portion (349) intersects said substantially planar end face (326) of said body portion (322) at an obtuse angle.

## Patentansprüche

1. Ein selbstbefestigendes Befestigungselement (320), aufweisend:
ein im Wesentlichen zylindrisches Führungsteil (330) mit einer ebenen ringförmigen Endfläche (334), einem Loch (332), das sich durch das Führungsteil (330) und durch die ebene ringförmige Endfläche (334) erstreckt, ein Rumpfteil (322) mit ebenen Endflächen (326), beabstandete im Wesentlichen bogenförmige Flanschteile (338) an gegenüberliegenden Seiten des Führungsteils (330) beabstandet von dem Führungsteil (330) jeweils mit einer im Wesentlichen ebenen im Wesentlichen bogenförmigen ersten Lageroberfläche (340) beabstandet unterhalb der Ebene der ebenen ringförmigen Endfläche (334) des Führungsteils (330) und eine zweite im Wesentlichen ebene Lageroberfläche (342) beabstandet unterhalb der Ebene der ersten Lageroberfläche (340), wobei jedes der im Wesentlichen bogenförmigen Flanschteile (338) eine Oberfläche (348) aufweist, die benachbart ist zu der zweiten Lageroberfläche (342), welche an einer Mitte bogenförmig und an Endteilen (349) gerade ist.

2. Das selbstbefestigende Befestigungselement (320) wie in Anspruch 1 definiert, wobei die zweite im Wesentlichen ebene Lageroberfläche (342) zwischen den Flanschteilen (338) und dem Führungsteil (330) angeordnet ist und im Wesentlichen das Führungsteil (330) umgibt.

3. Das selbstbefestigende Befestigungselement (320) wie in jeglichem der Ansprüche 1 oder 2 definiert, wobei die im Wesentlichen ebenen bogenförmigen ersten Lageroberflächen (340) jeweils zumindest zwei beabstandete im Wesentlichen bogenförmige Segmente aufweisen und die zweite im Wesentlichen ebene Lageroberfläche (342) sich zwischen den beabstandeten im Wesentlichen bogenförmigen Segmenten erstreckt.

4. Das selbstbefestigende Befestigungselement (320) wie in Anspruch 3 definiert, wobei die beabstandeten im Wesentlichen bogenförmigen Segmente beinhalten gegenüberliegende geneigte Oberflächen (348) nach innen gewinkelt von der zweiten Lageroberfläche (342) zu der ersten Lageroberfläche (340).

5. Das selbstbefestigende Befestigungselement (320) wie in jeglichen der Ansprüche 1 bis 4 definiert, wobei die im Wesentlichen bogenförmigen Flanschteile (338) jeweils eine geneigte Oberfläche (348) beinhalten, die zu dem Führungsteil zeigt (330), nach innen gewinkelt von der zweiten Lageroberfläche (342) in Richtung des Führungsteils (330).

6. Das selbstbefestigende Befestigungselement (320) wie in Anspruch 5 definiert, wobei die geneigte Oberfläche (348) der Flanschteile (338), die zum Führungsteil (330) zeigt, ein ringförmiges konisches Mittelteil und gerade geneigte Seitenteile auf den gegenüberliegenden Seiten des Mittelteils beinhaltet.

7. Das selbstbefestigende Befestigungselement (320) wie in jeglichen der Ansprüche 1 bis 6 definiert, wobei das im Wesentlichen zylindrische Führungsteil (330) beinhaltet eine gewinkelte äußere Oberfläche geneigt von der zweiten Lageroberfläche (342) in Richtung der Flanschteile (338).

8. Das selbstbefestigende Befestigungselement (320) wie in jeglichen der Ansprüche 1 bis 7 definiert, wobei das im Wesentlichen zylindrische Führungsteil (330) integrierte Absatzteile (350) beinhaltet beabstandet unterhalb der Ebene der Endfläche, über die zweiten im Wesentlichen ebenen Lageroberfläche (342) liegend.

9. Das selbstbefestigende Befestigungselement (320) wie in Anspruch 8 definiert, wobei die Absatzteile (350) integriert aus der ebenen Endfläche des Führungsteils (330) gebildet sind und sich radial in Richtung einer Endfläche des selbstbefestigenden Befestigungselements (320) erstrecken und das Führungsteil (330) flache Oberflächen (351) oberhalb der Absatzteile (350) beinhaltet.

10. Das selbstbefestigende Befestigungselement (320) wie in jeglichen der Ansprüche 1 bis 9 definiert, wobei das selbstbefestigende Befestigungselement (320) ebene Endflächen und bogenförmige Seitenflächen beinhaltet und die im Wesentlichen bogenförmigen Flanschteile (338) sich von den bogenförmigen Seitenflächen erstrecken.

11. Das selbstbefestigende Befestigungselement (320) wie in jeglichen der Ansprüche 1 bis 10 definiert, wobei die zweite Lageroberfläche (342) auf gegenüberliegenden Seiten des Führungsteils (330) gerade Kerben zum Aufnehmen eines Drahts beinhaltet.

12. Das selbstbefestigende Befestigungselement (320) wie in Anspruch 11 definiert, wobei die Kerben zum Aufnehmen eines Drahts jeweils eine Bodenoberfläche mit einer Vielzahl an beabstandeten Taschen beinhalten.

13. Das selbstbefestigende Befestigungselement (320) wie in jeglichen der Ansprüche 1 bis 11 definiert, wobei das im Wesentlichen zylindrische Führungsteil (330) beinhaltet eine zylindrische Oberfläche benachbart zu der Endfläche und eine nach innen geneigte kegelstumpfförmige Oberfläche benachbart zu der zweiten Lageroberfläche (342).

14. Das selbstbefestigende Befestigungselement (320) wie in Anspruch 13 definiert, wobei die im Wesentlichen bogenförmigen Flanschteile (338) jeweils beinhalten eine geneigte im Wesentlichen bogenförmige Fläche gegenüber der nach innen geneigten kegelstumpfförmigen Oberfläche des Führungsteils (330) nach innen geneigt von der ersten Lageroberfläche (340) zu der zweiten Lageroberfläche (342).

15. Das selbstbefestigende Befestigungselement (320) wie in jeglichen der Ansprüche 1 bis 14 definiert, wobei die im Wesentlichen bogenförmigen Flanschteile (338) jeweils beinhalten eine Oberfläche gegenüber des im Wesentlichen zylindrischen Führungsteils (330) mit einem Schlitz, der sich in die erste Lageroberfläche (340) erstreckt.

16. Das selbstbefestigende Befestigungselement (320) wie in Anspruch 15 definiert, wobei die im Wesentlichen bogenförmigen Flanschteile (338) jeweils beinhalten eine Vielzahl von den Schlitzen, die im Wesentlichen gleich beabstandet in den im Wesentlichen bogenförmigen Flanschteilen (338) sind.

17. Das selbstbefestigende Befestigungselement (320) wie in Anspruch 15 definiert, wobei der Schlitz integriert aus der ersten Lageroberfläche (340) gebildet ist, einen integrierten Absatz formend, der über der zweiten Lageroberfläche (342) liegt und sich in Richtung des Führungsteils (330) erstreckt.

18. Das selbstbefestigende Befestigungselement (320) wie in jeglichen der Ansprüche 1 bis 17 definiert, wobei das im Wesentlichen gerade Endteil (349) die substantiell ebene Endfläche (326) des Rumpfteils (322) in einem stumpfen Winkel unterbricht.

## Revendications

1. Fixation autosolidarisante (320), comprenant :
une partie pilote généralement cylindrique (330) ayant une face d'extrémité annulaire plane (334), un alésage (332) s'étendant au travers de ladite partie pilote (330) et au travers de ladite face d'extrémité annulaire plane (334), une partie de corps (322) ayant des faces d'extrémité planes (326), des parties de rebord arquées généralement espacées (338) sur des côtés opposés de ladite partie pilote (330) espacés de ladite partie pilote (330) ayant chacune une première surface de palier généralement plane généralement arquée (340) espacée au-dessous du plan de ladite face d'extrémité annulaire plane (334) de ladite partie pilote (330) et une seconde surface de palier généralement plane (342) espacée au-dessous du plan de ladite première surface de palier (340), chacune des parties de rebord généralement arquées (338) comprenant une surface (348) adjacente à ladite seconde surface de palier (342) qui est arquée en un centre et linéaire aux parties d'extrémité (349).

2. La fixation autosolidarisante (320) telle que définie dans la revendication 1, dans laquelle ladite seconde surface de palier généralement plane (342) est située entre lesdites parties de rebord (338) et ladite partie pilote (330) et entourant généralement ladite partie pilote (330).

3. La fixation autosolidarisante (320) telle que définie dans l'une des revendications 1 et 2, dans laquelle lesdites surfaces de palier arquées généralement planes (340) comprennent chacune au moins deux segments généralement arqués espacés et ladite seconde surface de palier généralement plane (342) s'étend entre lesdits segments généralement arqués espacés.

4. La fixation autosolidarisante (320) telle que définie dans la revendication 3, dans laquelle lesdits segments généralement arqués espacés comprennent des surfaces inclinées opposées (348) faisant un angle vers l'intérieur à partir de ladite seconde surface de palier (342) vers ladite première surface de palier (340).

5. La fixation autosolidarisante (320) telle que définie dans l'une des revendications 1 à 4, dans laquelle lesdites parties de rebord généralement arquées (338) comprennent chacune une surface inclinée (348) tournée vers ladite partie pilote (330) faisant un angle vers l'intérieur depuis ladite seconde surface de palier (342) en direction de ladite partie pilote (330).

6. La fixation autosolidarisante (320) telle que définie dans la revendication 5, dans laquelle ladite surface inclinée (348) desdites parties de rebord (338) tournées vers ladite partie pilote (330) comprend une partie centrale conique annulaire et des parties latérales inclinées linéaires sur des côtés opposés de ladite partie centrale.

7. La fixation autosolidarisante (320) telle que définie dans l'une des revendications 1 à 6, dans laquelle ladite partie pilote généralement cylindrique (330) comprend une surface extérieure faisant un angle incliné depuis ladite seconde surface de palier (342) en direction desdites parties de rebord (338).

8. La fixation autosolidarisante (320) telle que définie dans l'une des revendications 1 à 7, dans laquelle ladite partie pilote généralement cylindrique (330) comprend des parties de patte monobloc (350) espacées au-dessous dudit plan de ladite face d'extrémité recouvrant ladite seconde surface de palier généralement plane (342).

9. La fixation autosolidarisante (320) telle que définie dans la revendication 8, dans laquelle lesdites parties de patte (350) sont extraites monobloc à partir de ladite face d'extrémité plane de ladite partie pilote (330) et s'étendent radialement en direction d'une face d'extrémité de ladite fixation autosolidarisante (320) et la partie pilote (330) comprend les surfaces plates (351) au-dessus desdites parties de patte (350).

10. La fixation autosolidarisante (320) telle que définie dans l'une des revendications 1 à 9, dans laquelle ladite fixation autosolidarisante (320) comprend des faces d'extrémité planes et des faces latérales arquées et lesdites parties de rebord généralement arquées (338) s'étendent à partir desdites faces latérales arquées.

11. La fixation autosolidarisante (320) telle que définie dans l'une des revendications 1 à 10, dans laquelle ladite seconde surface de palier (342) comprend des rainures de réception d'un fil linéaire sur des côtés opposés de ladite partie pilote (330).

12. La fixation autosolidarisante (320) telle que définie dans la revendication 11, dans laquelle lesdites rainures de réception de fil comprennent chacune une surface inférieure comportant une pluralité de poches espacées.

13. La fixation autosolidarisante (320) telle que définie dans l'une des revendications 1 à 11, dans laquelle ladite partie pilote généralement cylindrique (330) comprend une surface cylindrique adjacente à ladite face d'extrémité et une surface tronconique inclinée vers l'intérieur adjacente à ladite seconde surface de palier (342).

14. La fixation autosolidarisante (320) telle que définie dans la revendication 13, dans laquelle lesdites parties de rebord généralement arquées (338) comprennent chacune une face généralement arquée inclinée en vis-à-vis de ladite surface tronconique inclinée vers l'intérieur de ladite partie pilote (330) inclinée vers l'intérieur de ladite surface de palier (340) vers ladite seconde surface de palier (342).

15. La fixation autosolidarisante (320) telle que définie dans l'une des revendications 1 à 14, dans laquelle lesdites parties de rebord généralement arquées (338) comprennent chacune une surface en vis-à-vis de ladite partie pilote généralement cylindrique (330) comportant une encoche s'étendant jusque dans ladite première surface de palier (340).

16. La fixation autosolidarisante (320) telle que définie dans la revendication 15, dans laquelle lesdites parties de rebord généralement arquées (338) comprennent chacune une pluralité desdites encoches espacées de façon généralement égale dans lesdites parties de rebord généralement arquées (338).

17. La fixation autosolidarisante (320) telle que définie dans la revendication 15, dans laquelle ladite encoche est extraite monobloc à partir de ladite première surface d'appui (340) en formant une patte monobloc recouvrant ladite seconde surface de palier (342) s'étendant en direction de ladite partie pilote (330).

18. La fixation autosolidarisante (320) telle que définie dans l'une des revendications 1 à 17, dans laquelle ladite partie d'extrémité généralement linéaire (349) inter-secte ladite face d'extrémité substantiellement plane (326) de ladite partie de corps (322) selon un angle obtus.
